# EUROPEAN PATENT APPLICATION

(11) **EP 3 474 089 A1**
(43) Date of publication of application: **24.04.2019**
(21) Application number: 18158471.5
(22) Date of filing: 23.02.2018
(51) Int. Cl.: G04G 21/08

(54) **WRISTWATCH AND METHOD APPLICABLE TO WRISTWATCH FOR INPUTTING PASSWORD**

(30) Priority: 20.10.2017 TW 106136241
(71) Applicant: Princo Corp., Hsinchu 300 (TW)
(72) Inventor: CHIU, Pei-liang, 300 Hsinchu (TW)
(74) Representative: Murgitroyd & Company

(57) **Abstract**

A wristwatch and a method applicable to the wristwatch for inputting a password are provided. The wristwatch includes a transparent conductive film (30) attached to an inner face of a transparent cover (21) of the wristwatch. The transparent conductive film (30) is divided into a plurality of regions (31, 32). User operations made on the plural regions (31, 32) of the transparent conductive film (30) can achieve password input.

## Description

### BACKGROUND

### 1. Field of the Disclosure

The present disclosure relates to a wristwatch, and more particularly to a wristwatch capable of carrying out password input.

### 2. Description of Related Art

A wristwatch is a device used to show time. Generally speaking, use of buttons or knobs is required in order to achieve an input function (e.g., password input) in traditional wristwatches. However, it is usually not allowed to have too many buttons in traditional wristwatch designs. It is also too complicated for input using the buttons. Accordingly, there is a need to provide a new solution to solve this problem.

### SUMMARY

The present disclosure provides a wristwatch and a method applicable to the wristwatch for inputting a password, which are able to carry out password input.

In one aspect, the present disclosure provides a wristwatch including a housing defining a receiving room, a part of the housing formed by a transparent cover, the wristwatch further including a dial, physical scales on a face of the dial, and physical indicators disposed above the dial and cooperating with the physical scales to show time, the wristwatch further including a transparent conductive film attached to an inner face of the transparent cover, the transparent conductive film divided into a plurality of regions, each of the regions including a plurality of conductive wires that are interlaced with each other to construct a plurality of conductive units; a touch detector disposed in the receiving room and electrically connected to the regions of the transparent conductive film, configured to detect an integral effect of electrical signal changes of the conductive units in each of the regions to output a detecting signal; and a processor disposed in the receiving room and coupled to the touch detector, configured to receive the detecting signal transmitted from the touch detector and convert the detecting signal into a password.

In another aspect, the present disclosure provides a method for inputting a password, applicable to a wristwatch, the wristwatch including a housing defining a receiving room, a part of the housing formed by a transparent cover, the wristwatch further including a dial, physical scales on a face of the dial, and physical indicators disposed above the dial and cooperating with the physical scales to show time, the method including attaching a transparent conductive film to an inner face of the transparent cover, the transparent conductive film divided into a plurality of regions, each of the regions including a plurality of conductive wires that are interlaced with each other to construct a plurality of conductive units; detecting an integral effect of electrical signal changes of the conductive units in each of the regions to output a detecting signal; and converting the detecting signal into a password.

In the wristwatch and the password input method of the present disclosure, user operations made on the transparent conductive film disposed on the inner face of the transparent cover of the wristwatch can achieve password input and carry out password protection.

### BRIEF DESCRIPTION OF DRAWINGS

FIG. 1 is a top view of a wristwatch in accordance with an embodiment of the present disclosure.
FIG. 2 is a lateral view of the wristwatch in accordance with the embodiment of the present disclosure.
FIG. 3 is a schematic diagram showing a transparent cover of a wristwatch having a transparent conductive film attached thereto in accordance with an embodiment of the present disclosure.
FIG. 4 is a schematic diagram showing a functional module and a transparent conductive film of a wristwatch in accordance with an embodiment of the present disclosure.
FIG. 5A is a schematic diagram showing a wristwatch having a transparent conductive film attached thereto in accordance with an embodiment of the present disclosure.
FIG. 5B is a schematic diagram showing the transparent conductive film shown in FIG. 5A.
FIG. 6 is a schematic diagram showing a wristwatch including a short distance communication module in accordance with an embodiment of the present disclosure.
FIG. 7 is a flowchart of a password input method applicable to a wristwatch in accordance with an embodiment of the present disclosure.

### DETAILED DESCRIPTION OF PREFERRED EMBODIMENTS

To make the objectives, technical schemes, and technical effects of the present disclosure more clearly and definitely, the present disclosure will be described in details below by using embodiments in conjunction with the appending drawings. It should be understood that the specific embodiments described herein are merely for explaining the present disclosure, and as used herein, the term "embodiment" refers to an instance, an example, or an illustration but is not intended to limit the present disclosure. In addition, the articles "a" and "an" as used in the specification and the appended claims should generally be construed to mean "one or more" unless specified otherwise or clear from the context to be directed to a singular form.

The present disclosure provides a wristwatch. The wristwatch has a transparent conductive film attached to a transparent cover of the wristwatch. The transparent conductive film is divided into a plurality of regions. A user can click on these regions to carry out password input.

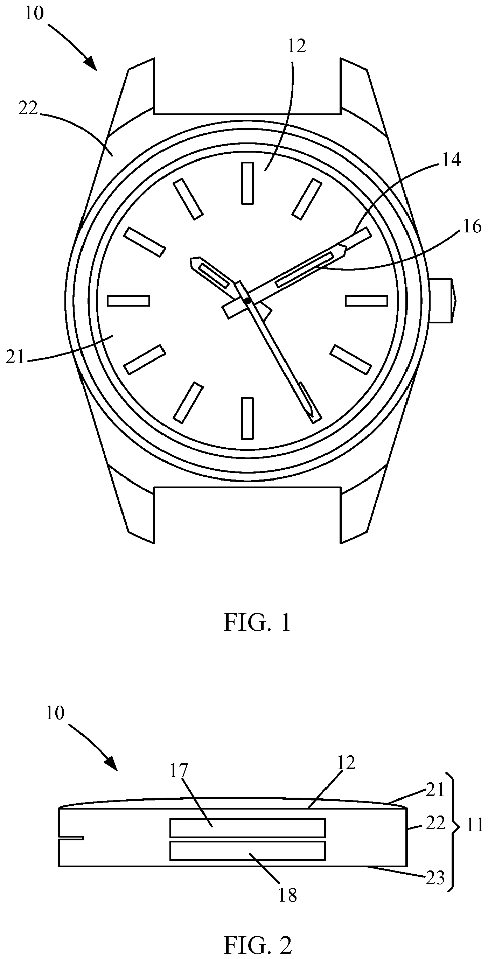

FIG. 1 is a top view of a wristwatch in accordance with an embodiment of the present disclosure. FIG. 2 is a lateral view of the wristwatch in accordance with the embodiment of the present disclosure. As shown in FIG. 1 and FIG. 2, the wristwatch 10 includes a housing 11. The housing 11 includes a top cover 21, a watch case 22, and a bottom cover 23. The top cover 21 is made of a transparent material (e.g., glass). The transparent cover 21 is a part of the housing 11. A receiving room is defined by the top cover 21, the watch case 22, and the bottom cover 23. The wristwatch 10 further includes a dial 12, a plurality of physical scales, and a plurality of physical indicators 16 that are disposed in the receiving room. The physical scales (e.g., hour scales) 14 are formed on a face of the dial 12. The physical indicators (e.g., a hour hand, minute hand, and second hand) 16 are disposed above the dial 12. The physical indicators 16 cooperate with the physical scales 14 to show time. Through the transparent top cover 21, a user can perceive position information (i.e., time information) indicated by the physical indicators 16.

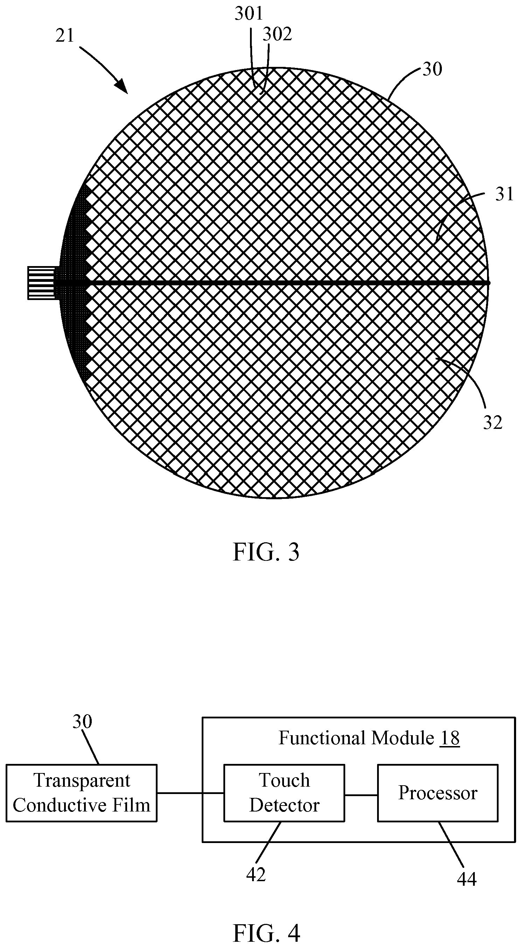

FIG. 3 is a schematic diagram showing a transparent cover of a wristwatch having a transparent conductive film attached thereto in accordance with an embodiment of the present disclosure. The wristwatch 10 further includes a transparent conductive film 30 attached to an inner face of the top cover 21. As shown in FIG. 3, the transparent conductive film 30 is a conductive film formed in a mesh shape. In practice, the mesh shape is formed by a plurality of ultra-fine metal lines. The transparent conductive film 30 is deployed on the top cover 21. The user can still perceive the position where the physical indicators 16 indicate.

The transparent conductive film 30 is divided into a plurality of regions. The regions are electrically disconnected from each other. FIG. 3 is illustrated with two regions (i.e., a first region 31 and a second region 32). It can be understood that the transparent conductive film 30 can be divided into a plurality of regions that are electrically disconnected from each other. Each region includes a plurality of conductive wires 301 that are interlaced with each other to construct a plurality of conductive units 302. An integral effect of electrical signal changes (e.g., voltage or current signal changes) of all the conductive units 302 in each of the regions is generated by an approximal action or a touch action performed above or onto the region. For example, when a user's finger touches a region, a change of electric charges is generated in the region. By detecting electric charge changes of each region, it can be known which region is touched by the user's finger.

It can be understood by a person skilled in the art that using the transparent conductive film 30 to detect user operations as described above is apparently different from touch operation sensing technologies used in conventional touch panels and image display technologies with pixel electrodes used in conventional display panels.

FIG. 4 is a schematic diagram showing a functional module and a transparent conductive film of a wristwatch in accordance with an embodiment of the present disclosure. Referring to FIG. 2 and FIG. 4, the wristwatch 10 further includes a movement 17 and a functional module 18 that are disposed in the receiving room. The movement 17 is used to drive the physical indicators 16 to show time. The functional module 18 includes a touch detector 42 and a processor 44. The touch detector 42 is electrically connected to the regions of the transparent conductive film 30. Specifically, each region of the transparent conductive film 30 is connected to the touch detector 42 via a transmission wire. The touch detector 42 can detect changes of electric charges on the regions. For example, when a user's finger touches the first region 31, the touch detector 42 will detect changes of electric charges on the first region 31 and determine that the first region 31 is touched; when a user's finger touches the second region 32, the touch detector 42 will detect changes of electric charges on the second region 32 and determine that the second region 32 is touched.

The touch detector 42 detects an integral effect of electrical signal changes of the conductive units 302 in each of the regions to output a detecting signal. The processor 44 is coupled to the touch detector 42. The processor 44 receives the detecting signal transmitted from the touch detector 42 and converts the detecting signal into a password. Specifically, the password has a plurality of digits, the touch detector 42 may pass an order that the electrical signal changes are generated in the regions, to the processor 44, and the processor 44 may generate each of the digits of the password according to the order. That is, an order of the digits of the password corresponds to an order that the regions are touched by the user. For example, a region first touched by the user corresponds to a first digit of the password; a region last touched by the user corresponds to a last digit of the password. Specifically, the regions of the transparent conductive film 30 may correspond to a range of values of one digit of the password. For example, the number of possible values of one digit of the password corresponds to the number of the regions. For example, possible values of one digit of the password may include 0 and 1. The first region 31 corresponds to the value "0" and the second region 32 corresponds to the value "1". When the user touches the first region 31, it means that the user inputs the value "0". When the user touches the second region 32, it means that the user inputs the value "1".

For example, when the user touches the first region 31, the second region 32, and the first region 31 in order, the touch detector 42 will sequentially transmit a signal representative of the first region 31, a signal representative of the second region 32, and a signal representative of the first region 31 to the processor 44, and the processor 44 will process these signals to obtain a password "010".

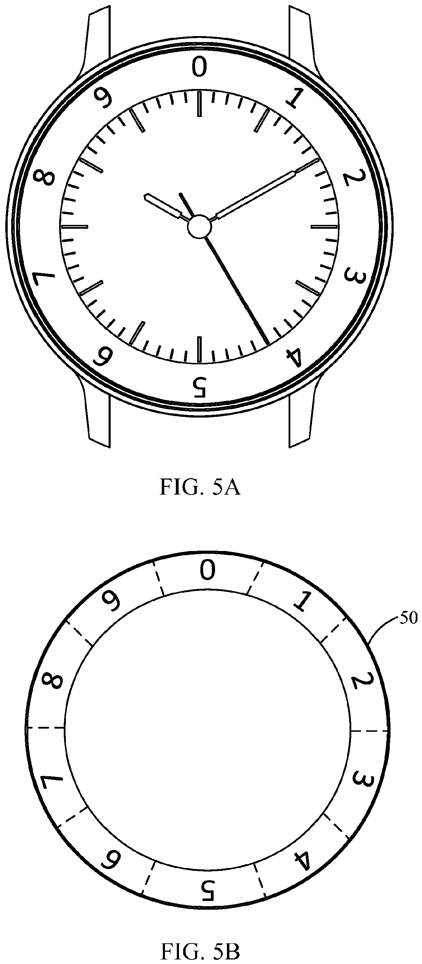

FIG. 5A is a schematic diagram showing a wristwatch having a transparent conductive film attached thereto in accordance with an embodiment of the present disclosure.

FIG. 5B is a schematic diagram showing the transparent conductive film shown in FIG. 5A. The transparent conductive film can be a ring 50 attached to an inner face of the top cover. The ring 50 is equally divided into ten regions and each of the regions is labeled by a number. For example, as shown in FIG. 5A and FIG. 5B, ten regions of the ring 50 are labeled by numbers 0 to 9. When the user touches one of the regions, it means that a number on the label attached to the region is inputted. For example, when the user touches a number "5", it means that the number "5" is inputted as one digit of the password. For example, when the user touches the regions corresponding to "2", "6", "7", and "2" in order, it means that a password "2672" is inputted.

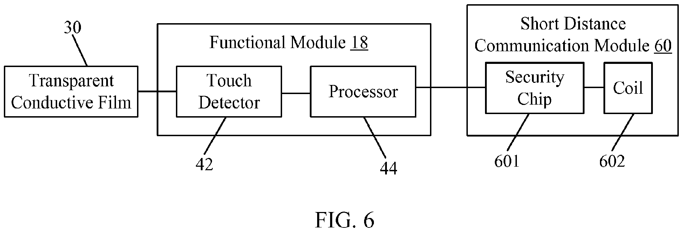

FIG. 6 is a schematic diagram showing a wristwatch including a short distance communication module in accordance with an embodiment of the present disclosure. The wristwatch may include a short distance communication module 60 configured to carry out short distance communication with an external device. The short distance communication module may include a radio frequency identification (RFID) module or a near field communication (NFC) module, but is not limited thereto. The short distance communication module 60 includes a security chip 601 and a coil 602. The security chip 601 may be disposed in the receiving room defined by the housing of the wristwatch. The coil 602 may be disposed on the housing. The security chip 601 is used to process private information of a user. The coil 602 is coupled to the security chip 601. The coil 602 is used to transmit electromagnetic signals. Specifically, when the security chip 601 is to transmit signals to the external device, the coil 602 is applied with an electric current varying with time to generate electromagnetic signals; when the external device is to transmit signals to the security chip 601, the coil 602 generates an electric current varying with time due to external electromagnetic signals and accordingly, the security chip 601 can receive the signals transmitted by the external device.

The short distance communication module 60 is electrically coupled to the processor 44 of the functional module 18. When the short distance communication module 60 requires password authentication, the short distance communication module 601 can send a password request to the processor 44 by using the security chip 601. The processor 44 will generate a password based on operations made by a user onto the transparent conductive film, and transmit the generated password to the security chip 601 for password authentication.

In an application scenario, a RFID/NFC module that is originally used in various types of cards can be integrated into the wristwatch. When the RFID/NFC module communicates with a reader, it is able to input a password using the transparent conductive film of the wristwatch to achieve password protection. In one example, a RFID/NFC module with an electronic payment function may be integrated into the wristwatch. A user can input a password with help of the transparent conductive film of the wristwatch in electronic payments to increase the security.

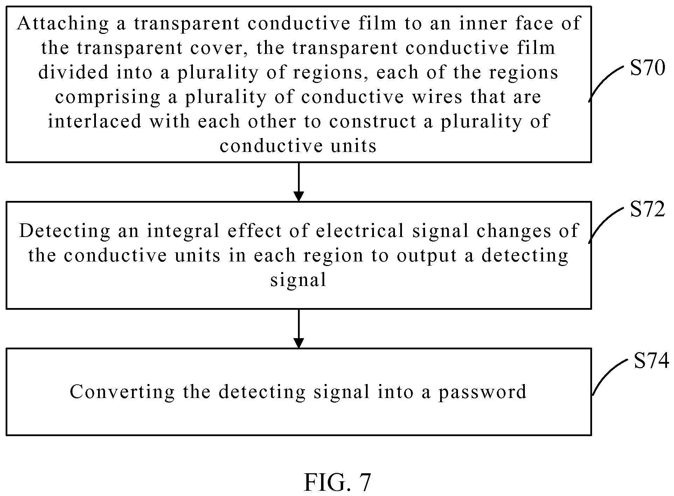

FIG. 7 is a flowchart of a password input method applicable to a wristwatch in accordance with an embodiment of the present disclosure. Referring to FIG. 7 with reference to the above context, the method includes the following steps.

In Step S70, the transparent conductive film 30 is attached to an inner face of the transparent cover 21. The transparent conductive film 30 is divided into a plurality of regions (e.g., the first region 31 and the second region 32). Each of the regions includes a plurality of conductive wires 301 that are interlaced with each other to construct a plurality of conductive units 302.

In Step S72, an integral effect of electrical signal changes of the conductive units 302 is detected in each of the regions to output a detecting signal. In this step, the touch detector 42 can detect changes of electric charges on the regions. For example, when a user's finger touches a certain region, the touch detector 42 will detect a change of electric charges of the region and determine that the region is touched.

In Step S74, the detecting signal is converted into a password. In this step, the processor 44 receives the detecting signal transmitted from the touch detector 42 and converts the detecting signal into a password. Specifically, the password has a plurality of digits, and Step S74 may include a step of generating each of the digits of the password according to an order that the electrical signal changes are generated in the regions. The regions may correspond to a range of values of one digit of the password. Other details are referred to the above context.

Other details of the password input method of the present disclosure can be referred to the descriptions on the wristwatch structure in the above context, and are not repeated herein.

In the wristwatch and the password input method of the present disclosure, user operations made on the transparent conductive film disposed on the inner face of the transparent cover of the wristwatch can achieve password input and carry out password protection.

While the preferred embodiments of the present disclosure have been illustrated and described in detail, various modifications and alterations can be made by persons skilled in this art. The embodiment of the present disclosure is therefore described in an illustrative but not restrictive sense. It is intended that the present disclosure should not be limited to the particular forms as illustrated, and that all modifications and alterations which maintain the realm of the present disclosure are within the scope as defined in the appended claims.

## Claims

1. A wristwatch comprising a housing (11) defining a receiving room, a part of the housing (11) formed by a transparent cover (21), the wristwatch further comprising a dial (12), physical scales (14) on a face of the dial (12), and physical indicators (16) disposed above the dial (12) and cooperating with the physical scales (14) to show time, **characterized in that** the wristwatch further comprises:
a transparent conductive film (30) attached to an inner face of the transparent cover (21), the transparent conductive film (30) divided into a plurality of regions (31, 32), each of the regions (31, 32) comprising a plurality of conductive wires (301) that are interlaced with each other to construct a plurality of conductive units (302);
a touch detector (42) disposed in the receiving room and electrically connected to the regions (31, 32) of the transparent conductive film (30), configured to detect an integral effect of electrical signal changes of the conductive units (302) in each of the regions (31, 32) to output a detecting signal; and
a processor (44) disposed in the receiving room and coupled to the touch detector (42), configured to receive the detecting signal transmitted from the touch detector (42) and convert the detecting signal into a password.

2. The wristwatch according to claim 1, **characterized in that** the password has a plurality of digits, the touch detector (42) passes an order that the electrical signal changes are generated in the regions (31, 32), to the processor (44), and the processor (44) generates each of the digits of the password according to the order.

3. The wristwatch according to claim 1, **characterized in that** the regions (31, 32) correspond to a range of values of one digit of the password.

4. The wristwatch according to claim 1, **characterized in that** an operation made by a user onto one of the regions (31, 32) corresponds to one digit of the password.

5. The wristwatch according to claim 1, **characterized in that** the transparent conductive film (30) is shaped as a ring that is equally divided into ten regions, and each region is labeled by a number.

6. The wristwatch according to claim 1, **characterized in that** the wristwatch further comprises:
a short distance communication module (60) coupled to the processor (44), configured to carry out short distance communication with an external device, wherein the short distance communication module (60) sends a password request to the processor (44), and the processor (44) transmits the generated password to the short distance communication module (60) in response to the password request.

7. The wristwatch according to claim 1, **characterized in that** the short distance communication module (60) comprises:
a security chip (601) configured to process private information of a user; and
a coil (602) coupled to the security chip (601), configured to transmit electromagnetic signals.

8. A method for inputting a password, applicable to a wristwatch, the wristwatch comprising a housing (11) defining a receiving room, a part of the housing (11) formed by a transparent cover (21), the wristwatch further comprising a dial (12), physical scales (14) on a face of the dial (12), and physical indicators (16) disposed above the dial (12) and cooperating with the physical scales (14) to show time, **characterized in that** the method comprises:
attaching a transparent conductive film (30) to an inner face of the transparent cover (21), the transparent conductive film (30) divided into a plurality of regions (31, 32), each of the regions (31, 32) comprising a plurality of conductive wires (301) that are interlaced with each other to construct a plurality of conductive units (302);
detecting an integral effect of electrical signal changes of the conductive units (302) in each of the regions (31, 32) to output a detecting signal; and
converting the detecting signal into a password.

9. The method according to claim 8, **characterized in that** the password has a plurality of digits, and the converting step comprises:
generates each of the digits of the password according to an order that the electrical signal changes are generated in the regions (31, 32).

10. The method according to claim 8, **characterized in that** in the converting step, the regions (31, 32) correspond to a range of values of one digit of the password.

11. The method according to claim 8, **characterized in that** the method further comprises:
mapping an operation made by a user onto one of the regions (31, 32) to one digit of the password.

12. The method according to claim 8, **characterized in that** in the attaching step, the transparent conductive film (30) is a ring equally divided into ten regions, each of which is labeled by a number.
